(19) **Europäisches Patentamt**
**European Patent Office**
**Office européen des brevets**

(11) **EP 4 703 850 A1**

(12) **EUROPEAN PATENT APPLICATION**

(43) Date of publication:
04.03.2026 Bulletin 2026/10

(21) Application number: 24209387.0

(22) Date of filing: 29.10.2024

(51) International Patent Classification (IPC):
*G06F 3/01* (2006.01)          *G06T 7/30* (2017.01)
*H04N 23/11* (2023.01)        *H04N 23/23* (2023.01)

(52) Cooperative Patent Classification (CPC):
**G06F 3/011; G02B 27/0172; H04N 23/11;**
G02B 2027/0138; G02B 2027/014; G02B 2027/0187

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 27.08.2024 HU 2400396

(71) Applicants:
• **Mihályfi, Zsolt**
  **2040 Budaörs (HU)**
• **Dobos, Gergely**
  **3530 Miskolc (HU)**
• **Bukvai, Károly Péter**
  **8220 Balatonalmádi (HU)**

• **Tálos, Péter László**
  **2890 Tata (HU)**
• **Fehérvári, András**
  **8483 Somlószölös (HU)**
• **Németh, Gábor**
  **2890 Tata (HU)**

(72) Inventors:
• **Mihályfi, Zsolt**
  **2040 Budaörs (HU)**
• **Dobos, Gergely**
  **3530 Miskolc (HU)**
• **Horváth, Gergely**
  **1087 Budapest (HU)**

(74) Representative: **FRKelly**
  **Waterways House**
  **Grand Canal Quay**
  **Dublin D02 PD39 (IE)**

(54) **SYSTEMS AND METHODS FOR REAL-TIME ALIGNMENT OF A VIRTUAL IMAGE ON AN AUGMENTED REALITY DISPLAY**

(57)    The present disclosure provides a method and augmented reality (AR) device for the real-time alignment of a virtual image on a real-world environment visible to a wearer through the display of the AR device. The method includes the calculation of a pixel offset value based on the distance from a distance measurement sensor of the device to a target object, a fixed distance between an imaging device of the AR device and an eye of the user, and a physical angle between the optical axis and the target object.

FIG. 5

**EP 4 703 850 A1**

## Description

### Field of the Invention

The present disclosure relates to augmented-reality (AR) devices. In particular, the present disclosure relates to an AR device configured for aligning a virtual image over a real-world environment on the display of said device in real-time, and associated methods.

### Background

Human vision is limited to a narrow slice of the electromagnetic (EM) spectrum, and the bands invisible to the human eye carry valuable information. By way of example, the infrared range of the EM spectrum contains useful information about the temperature of objects and infrared imaging device are found to be useful in a variety of settings including but not limited to construction, healthcare, firefighting, agriculture, law enforcement, hunting, and so on.

However, EM imaging devices are expensive, specialised equipment. The possibility to integrate EM imaging in to an AR device has been attempted previously but presents numerous challenges which have not been adequately addressed, not least of which is real-time alignment of EM data as a virtual image overlaid on the real-world environment visible to the AR device user.

U.S. Patent No. 11,232,609 (Birbaumer et al) relates to a method of displaying an image on a see-through display such as an AR device display. The method includes the capture of thermal radiation data and its processing through the analysis of histograms and coloring with color maps. The method in Birbaumer processes different temperature ranges separately then blends the resulting color images. At the end of the processing pipeline automatic brightness control is applied before the image is displayed. However, Birbaumer only relates to the post-processing pipeline of the visualization of the EM signal, and does not disclose a device or method for executing an alignment procedure of the virtual overlay image on the real environment.

U.S. Patent Publication No. US 2020/0366872 A1 (Vettese et al) relates to a head-mountable augmented reality system for displaying thermal images, in particular a device that can be mounted to firefighters' masks. The system in Vettese consists of a thermal camera, a display device and means connecting these together in an adjustable manner. The adjustment mechanisms are necessary to mount the display such that the image is visible and to rotate the camera such that the image overlaps with the world seen through the display. The disclosure of Vettese focuses on the mechanical adjustability of the thermal sensing device in order to align sensed objects with the user's field of view (FOV), as well as their device's compatibility with firefighter masks. There is no disclosure of an automated, real-time method of virtual image alignment on their AR display nor of an appropriate device for achieving the same.

International Patent Publication No. WO2015173528A1 (Granier et al) relates to a method for displaying camera images and other sensor data on head-mounted AR displays. The method in Granier involves processing camera images using sensor data, which can position and rotate the image in such a way that it overlaps with the real-world environment seen through the display. The method also claims to correct the parallax effect arising from the different positions of the capture and display device. However, Granier does not describe in any detail the process or what and how the sensors are used. Image overlay alignment is approached with mechanical repositioning of the imaging unit which requires motorized automation to react to changing target object distance which is too difficult to implement in a small wearable head mounted device. The EM virtual image is projected on the periphery of the wearer's vision, which does not allow one to fill in the area of acuity (fovea), which is crucial because the center 15° of the wearer's FOV is relevant for hand-eye coordination and interactions as well as the assessment of situations.

U.S. Patent No. 6,016,160 (Coombs et al) describes a thermal imaging apparatus and an opaque display mounted on a helmet such that the wearer can see the image of the camera on the display. The disclosure in Coombs describes multiple physical embodiments of a mounting system for television tube-based displays which is not a self-contained wearable solution. The Coombs approach does not allow the use of a see-through display technology which allows compositing the visible wavelength of the real environment and the thermal overlay. Since the user cannot see the real world, spatial orientation, recognition, and matching real objects with their corresponding thermal image, or hand-eye coordination and interaction with the real world, become impossible.

U.S. Patent Publication No. US 2005/0195277 A1 (Yamasaki et al) describes an image capturing apparatus that can be worn on the head and captures images in the user's line of sight (i.e. approximately what the wearer sees). The device uses a sensor to look at the eye of the user to determine the direction of their sight. The image captured by the sensor is then edited based on this. Yamasaki does not address the need, or provide a system or method, for real-time alignment of a virtual image overlay for the user.

U.S. Patent No. 6,849,849 (Warner et al) describes a portable radiometry and imaging device for vision enhancement purposes, including the capture of an infrared image. Warner presents a head-mounted thermal imaging system, but visualization is based on an opaque near-eye display. Warner does not disclose an alignment procedure for a virtual image overlaid on a real-world environment visible through a transparent display. The system in Warner is further described in U.S. Patent Publication No. US 2006/081778 A1 which focuses on how the thermal image is processed to highlight a certain temperature range, U.S. Patent No. 6,255,650 which focuses on aspects that make their device ideal for firefighters such as how the optical engine is cooled and how it can help find people or identify dangerously hot objects, and U.S. Patent No. 7,411,193 which focuses on how their device can be programmed to fit different use cases with preset ranges and colors. None of these disclosures address the need for a system and method for real-time alignment of a virtual image overlay on a real-world environment visible through a transparent AR display.

U.S. Patent Publication No. US 2023/0148872 A1 (Sowards et al) describes a system that uses a temperature scanning device to identify and locate blood vessels in patients. The device in Sowards consists of a standalone display and a handheld scanner. The device described in Sowards is not a head-mounted or AR wearable device and does not disclose any procedure for real-time alignment of a virtual image overlay on a real-world environment visible through a transparent AR display.

It is therefore desirable to provide systems and methods which address at least some of these challenges.

## Summary

According to a first aspect of the present disclosure, there is provided a method for real-time alignment of a virtual image over a real-world environment on an augmented-reality (AR) device display, comprising:

capturing at a first time, by a first imaging device, electromagnetic data of a target object in the user field-of-view (FOV), wherein the electromagnetic data comprises wavelengths of light that are not perceptible to the human eye; generating, based on the electromagnetic data, a first image that is visible to the human eye and projecting said first image on the AR device display;

determining, by a first measurement sensor, a first distance (D) to the target object in the user FOV; determining, based on the first distance (D) and a fixed distance (d) between the first imaging device and an eye of the user, an angle ($\phi$) between the optical axis and the target object; computing a pixel offset value to be applied to the first image such that it is projected on the AR device display aligned with the target object in the real-world environment; and re-projecting the first image on the display by the pixel offset value such that the first image is aligned with the target object in the real-world environment.

Preferably, the method further comprises repeating these steps in a continuous loop during use of the AR device. In some embodiments, the method further comprises capturing at a second time, by the first imaging device, electromagnetic data of a target object in the user field-of-view (FOV), wherein the electromagnetic data comprises wavelengths of light that are not perceptible to the human eye; generating, based on the electromagnetic data, a second image that is visible to the human eye and projecting said second image on the AR device display; determining, by the first measurement sensor, a second distance (D) from the target object in the user FOV; determining, based on the second distance (D) and the fixed distance (d), an angle ($\phi$) between the optical axis and the target object; computing a pixel offset value to be applied to the second image such that it is projected on the AR device display overlaid on the target object in the real-world environment; and re-positioning the second image on the display by the pixel offset value such that the second image is overlaid on the target object in the real-world environment.

Optionally, the pixel offset value is computed using the formula $P_h = \left(\frac{\pi}{2} - \phi - \tan^{-1}\left(\frac{D}{d}\right)\right)\frac{R_h}{F_h}$ , where

$P_h$ is the horizontal pixel offset applied to the first image;
D is the distance of the target object from the observer, measured by the first measurement sensor;
d is the fixed distance from the first imaging device to the eye of the user.
$R_h$ is the horizontal resolution of the first imaging device.
$F_h$ is the horizontal field of view of the first imaging device.
$\phi$ is the physical angle of the first imaging device where 0° is parallel to the optical axis of the display.

Optionally, the electromagnetic data captured by the first optical device comprises one or more multispectral wavelengths.

Optionally, the one or more multispectral wavelengths comprise one or more infrared wavelengths.

Optionally, the target object is selected to be the object returning the greatest reflected signal in a predefined area of the user FOV.

According to a further aspect of the present disclosure, there is provided an augmented-reality (AR) display device comprising one or more at least partially transparent lens located such that when the headset is worn by a user it overlays on the user's eye; means for projecting an image on to the one or more at least partially transparent lens; a first imaging device configured for capturing electromagnetic data at least comprising wavelengths of light that are not perceptible to the human eye; a first measurement sensor configured for determining a first distance (D) to a target object in the user's field-of-view (FOV); and one or more processors configured to execute the following steps:

generating, based on the electromagnetic data captured by the first imaging device, a first image that is visible to the human eye;

determining, based on the first distance (D) and a fixed distance (d) between the first imaging device and an eye of the user, an angle ($\phi$) between the optical axis and the target object;

computing a pixel offset value to be applied to the first image such that it is projected on one of the at least partially transparent lenses aligned with the target object in the real-world environment; and

re-positioning the first image from the optical axis by the pixel offset value such that the first image is aligned with the target object in the real-world environment.

Preferably, the processor(s) are configured to repeated the steps of generating, determining, computing, and re-positioning in a continuous loop during use of the AR device.

Optionally, the first imaging device comprises a multispectral electromagnetic imaging camera.

Optionally, the first imaging device is configured to capture one or more wavelengths of infrared light.

Optionally, the first measurement sensor comprises a LiDAR sensor, a Radar sensor, an infrared (IR) distance sensor, or an ultrasonic distance sensor.

Optionally, the processor(s) are configured to compute the pixel offset value using the formula

$$P_h = (\frac{\pi}{2} - \phi - \tan^{-1}\left(\frac{D}{d}\right))\frac{R_h}{F_h} \quad \text{where}$$

$P_h$ is the horizontal pixel offset applied to the first image;

D is the distance of the target object from the observer, measured by the first measurement sensor;

d is the fixed distance from the first imaging device to the eye of the user.

$R_h$ is the horizontal resolution of the first imaging device;

$F_h$ is the horizontal field of view of the first imaging device; and

$\phi$ is the physical angle of the first imaging device where 0° is parallel to the optical axis of the display.

## Brief Description of the Drawings

Figure 1 provides an overhead view of an AR device according to an exemplary embodiment of the present disclosure;

Figure 2 provides a virtual image alignment method for an AR device display according to an exemplary embodiment of the present disclosure;

Figure 3 provides a flow diagram illustrating a method of virtual image alignment on an AR device display according to an exemplary embodiment of the present disclosure;

Figures 4 and 5 provide overhead and isometric views, respectively, of an AR device according to an exemplary embodiment of the present disclosure;

Figure 6 provides a conceptual diagram illustrating a method of virtual image alignment on an AR device display according to an exemplary embodiment of the present disclosure;

Figure 7 provides a flow diagram illustrating a method of virtual image alignment on an AR device display according to an exemplary embodiment of the present disclosure.

## Detailed Description of the Drawings

The present disclosure will now be made with reference to the accompanying drawings. Like reference numerals are used to label like features. It will be understood that the Figures are provided by way of example only, and are not intended to be limiting on the scope of the disclosure.

The terms "device" and "headset" are used interchangeably in the present disclosure when referring to the exemplary embodiments of the Figures. Similarly, the terms "user" and "wearer" are used interchangeably herein when referring to a person having the device correctly disposed on their face in line with their eyes.

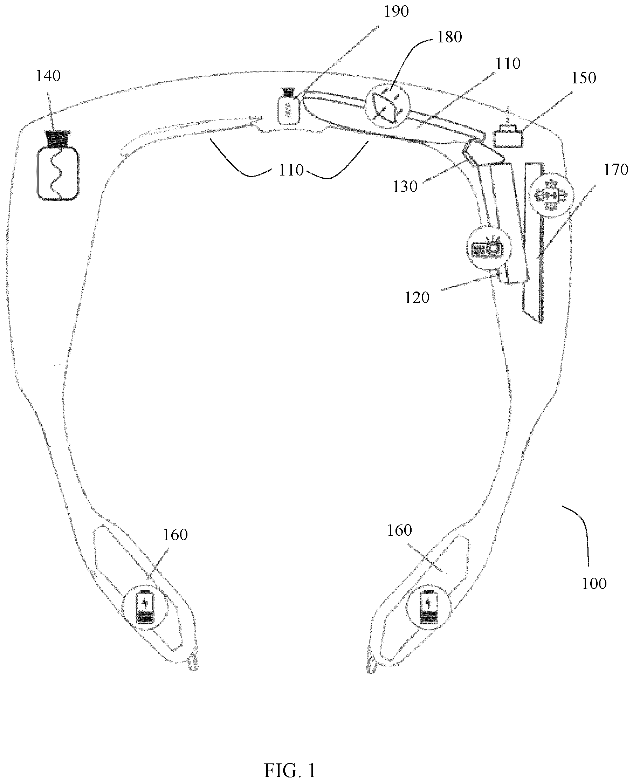

Referring to Figure 1, there is provided an overhead view of an AR display device 100 comprising one or more at least partially transparent lens 110 located such that when the headset 100 is worn by a user (not pictured) it overlays on the user's eye. In preferred embodiments the lens 110 is completely transparent and formed of either glass or a polymer. However in alternative embodiments the inventors have envisaged that the lens 110 may be partially transparent, for example by merit of comprising a filter element in or on the lens 110 or by merit of the lens 110 having been treated in a process that renders the lens material only partially transparent. The device 100 furthermore comprises means 120 for projecting an image on to the one or more at least partially transparent lens 110. In some embodiments, an optical element 130 may be arranged in front of the projector 120 in the direction of the lens 110 in order to provide a directional light path from the projector 120 to the lens 110. For example, in some embodiments the optical element 130 comprises a prism.

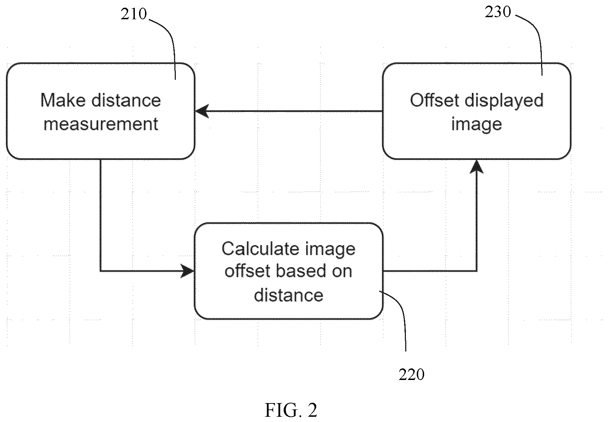

The device 100 additionally comprises a first imaging device 140 configured for capturing electromagnetic data at least comprising wavelengths of light that are not perceptible to the human eye. The skilled person will know that the human-perceptible range of wavelengths of EM radiation is about 380nm to about 700nm. In preferred embodiments, the first imaging device 140 comprises a multispectral electromagnetic imaging camera. Preferably, the first imaging device 140 is suitably configured for capturing one or more infrared wavelengths, i.e. in the range of about 780nm and about 1mm. The EM data captured by the first imaging device 140 in the field of view of the wearer of the device 100 will be converted in to a human-perceptible virtual image for display on the lens 110 of the device 100, overlaid on the real-world environment in front of the wearer. In particular, an objective of the present disclosure is to provide means and methods for not only projecting the human-perceptible virtual image on to the display of the AR device 100, but furthermore to correctly align said virtual image over its corresponding real object in the wearer's FOV and to continually reproject and align the image in real time as the wearer uses the device 100. Exemplary methods for achieving alignment and re-projection are provided ahead in the present disclosure, for example in relation to Figure 2-4.

The device 100 furthermore comprises at least a first measurement sensor 150 configured for determining a first distance to a target object in the user's field-of-view (FOV). The first measurement sensor 150 may comprise, but is not limited to, a LiDAR sensor, a Radar sensor, an infrared (IR) distance sensor, or an ultrasonic distance sensor. In the embodiments depicted in the Figures, the first imaging device 140 and the first measurement sensor 150 are located on opposite sides of the headset 100. However, the inventors also envisage that these devices 140, 150 may be located on the same side of the headset 100.

The device 100 includes one or more power sources 160 for power the electrical components of the device 100. In the exemplary embodiment, batteries 160 are provided on both sides of the headset, on the temple or the end pieces, in order to balance the weight distribution of the headset 100 and enhance comfort for the wearer, and simplify the electrical wiring of the circuitry underlying the headset 100. However, it is envisaged that a single power source 160 could be provided with the headset 100 and/or in a location other than the temple(s) or end point(s) of the headset 100. In preferred embodiments, the power source(s) 160 are rechargeable batteries. The power source(s) 160 may be selected from any of the known feasible options taking in to account the design constraints placed on a wearable headset, such as but not limited to lithium polymer batteries or lithium ion batteries.

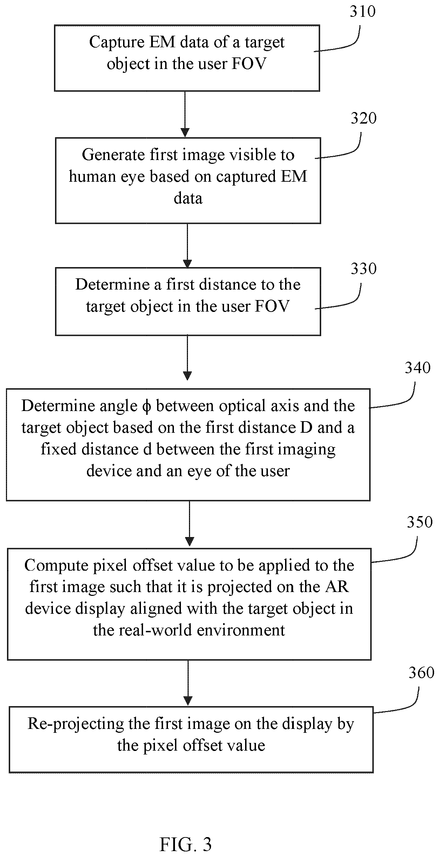

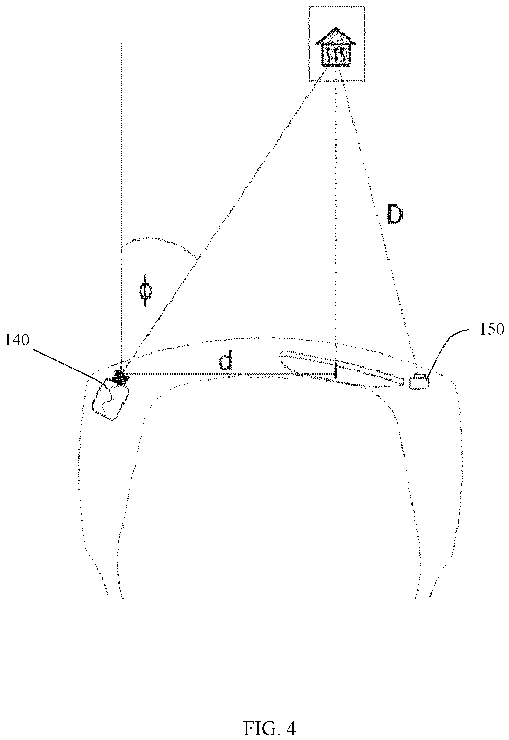

The device 100 is also provided with one or more processors 170 which are preferably configured to execute instructions, stored either in local memory on the device 100 or in a remote location such as on a remote server, for the process of aligning the virtual image on the AR display. The basic principle of alignment is illustrated firstly in Figure 2 as a continuous loop: in a first step 210, a distance measurement is taken by the first measurement sensor 150; in a second step 220, the offset for the virtual image is calculated based on distance measurement taken in 210; and in step 230 the virtual image is offset by the calculated amount and projected on the display of the device 100. This method is best described in further detail in relation to Figures 3 and 4.

The device 100 may further optionally include waveguide 180 which together with the optical element 130 creates an optical path between the projector 120 and the lens 110, allowing the projector 120 to be disposed at a 90° bend from the lens 110.

In some embodiments, the device 100 may further comprise a second imaging device 190 configured to capture audio, photos, and/or videos for subsequent review. The second imaging device 190 may be any conventional camera found on AR or other head-mounted devices.

Referring to Figure 3, there is illustrated a method for performing real-time compositing and alignment of a virtual image over a real-world environment on the n augmented-reality (AR) device 100 display.

In a first step 310, EM data of a target object in the user field-of-view (FOV) is captured by the first imaging device 140 at a first point in time. As discussed in relation to Figure 1, the data captured by the first imaging device 140 comprises wavelengths of light that are not perceptible to the human eye, such as but not limited to one or more infrared wavelengths of light.

In a second step 320, a first image that is visible to the human eye is generated based on the electromagnetic data captured by the first imaging device 140. This first image is then projected on the lens 110. In various embodiments, the first imaging device 140 or the processor(s) 170 are configured to generate the first image based on the EM data captured by the first imaging device 140. To that extent, the first imaging device 140 and/or the processor(s) 170 should be configured with appropriate image processing software of the kind capable of generating visible representations of electromagnetic data. For example, the image processing software may comprise, but is not limited to, proprietary software used in infrared imaging devices to generate a virtual image of the EM data capture by the device.

To ensure the virtual image is always aligned with the real environment, the device needs to accommodate based on the target distance just like the human eye. Therefore, in a third step 330, the first measurement sensor 150 is used to determine a first distance D to the target object in the user FOV. The challenge of alignment is found to be particularly noteworthy for objects close to the wearer. When the distance D to the target object is over about 12m, it can be considered infinite from the aspect of accommodation, because it does not have a substantial effect on image alignment. In the exemplary embodiment, the distance to the target object is determined on the optical axis of the wearer's eye through the centre of the projection area of the lens 110. The measurement device 150 takes the strongest signal in its FOV and selects and calculates the distance. For example, in embodiments where the first measurement sensor 150 is a LiDAR sensor, the strongest signal would be the strongest reflection. The distance D of the target object is preferably sampled in the area of interest, which may be a dedicated part of the lens 110 where the user looks. The exact size of the sample area in the lens 110 can be pre-defined dependent on the specific use. For example, the location of the sample area may be statically calibrated to the geometry and optical parameters of a given device 100.

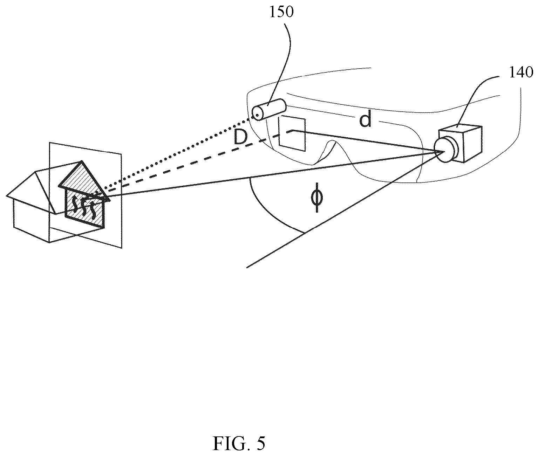

In a fourth step, an angle ($\phi$) between the optical axis through the first imaging device 140 and the target object is determined based on the first distance (D) and a fixed distance (d) between the first imaging device 140 and an eye of the user. In particular, the fixed distance d may be the distance from the first imaging device 140 to an optical axis through the centre of the eye of the user wearing the AR device. An example embodiment demonstrating the distance D, d and the angle $\phi$ between the optical axis and the target object is provided in Figures 4 and 5, however it should be appreciated that the example in Figures 4 and 5 are not intended to be limiting and the relative positions of the first imaging device 140, the first measurement sensor 150, and the target object 210 could be different to what is depicted in Figures 4 and 5.

In a fifth step 350, the processor(s) 170 compute a pixel offset value to be applied to the first image such that it is projected on the AR device display aligned with the target object in the real-world environment. Alignment of the virtual image and the real-world environment is based on digital re-projection of the virtual image based on the target distance D from the first measurement sensor 150. The re-projection process shifts each and every frame on the horizontal axis depending on whether the target distance D is increased or decreased. If the target distance D increases, the re-projection process offsets the virtual image on lens 110 to the temporal direction, otherwise, when the target distance D decreases, the virtual image is offset in the nasal direction to keep aligned with the real-world environment. The translation function of the relation between the image offset and the target distance depends on the discrepancy between the optical weight point of the first imaging device 140 and the lens 110, or between the optical weight point of the first imaging device 140 and the waveguide 180 assuming the eye is straight behind the waveguide 180 (i.e., the user is looking through the middle of the display), as well as the user's field of view.

In some embodiments, the pixel offset value is a horizontal offset value $P_h$ calculated using the formula:

$$P_h = (\frac{\pi}{2} - \phi - \tan^{-1}(\frac{D}{d}))\frac{R_h}{F_h}, \qquad \text{(Equation 1)}$$

Parameter 'D' is the distance of the target object from the observer, measured by the first measurement sensor, whilst 'd' is the fixed distance from the first imaging device to the eye of the user. '$R_h$' and '$F_h$' are the horizontal resolution and horizontal field of view of the first imaging device, respectively. The angle '$\phi$' is the physical angle of the first imaging device where 0° is parallel to the optical axis of the display, and the angle calculated from arctan(D/d) is the amount this physical angle $\phi$ is changed with a virtual offset.

In a sixth step 360, the first image is re-projected on to the lens 110 by the pixel offset value $P_h$ such that the first image is aligned with the target object in the real-world environment.

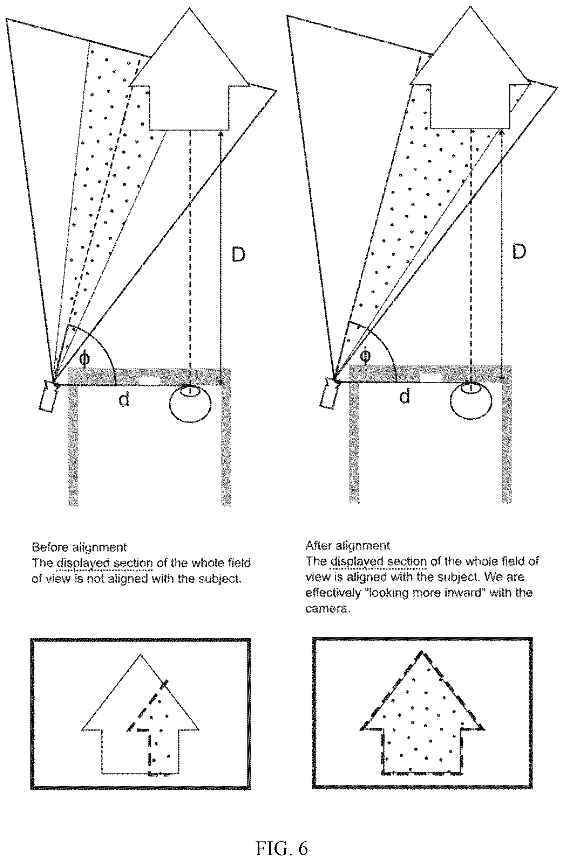

Conceptually, before and after the alignment procedure of Figure 3 is depicted in Figure 6. These steps of Figure 3 are preferably repeated throughout the use of the device 100, or at least throughout the use of the device 100 in an active mode where augmented reality functionality of the device 100 is being utilised. Alternatively, the method of Figure 3 may only be used for a specific function of the device 100, such as a thermal imaging application.

In preferred embodiments, the steps of Figure 3 take place before an image is displayed such that the wearer of the device 100 is not presented with an inaccurate pre-adjusted image and does not experience a significant period of time with a mis-aligned image in their FOV.

In certain embodiments, the process in Figure 3 may be performed for both lenses 110 of the device 100. In such embodiments it would be necessary to at least provide a second projector 120 on the opposite side of the device 100.

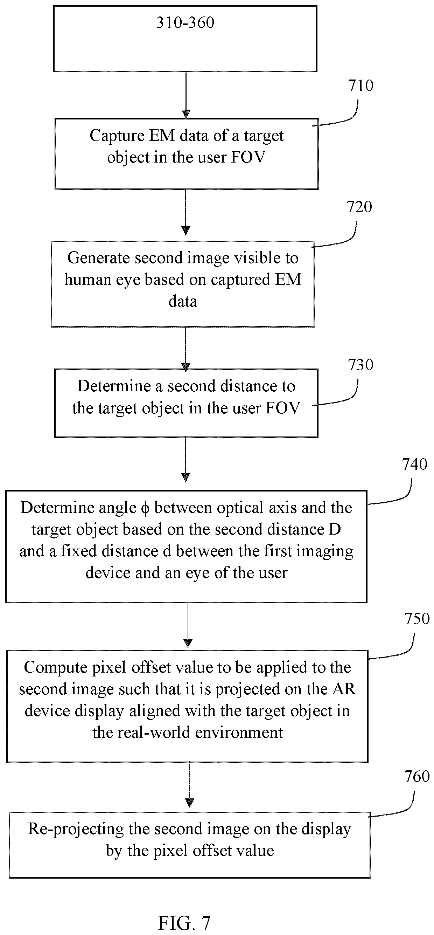

Figure 7 illustrates an example embodiment where the device 100 is configured to iterate an additional round of alignment, i.e. repeating the steps of Figure 3. In a first step 710, electromagnetic data of the target object in the user field-of-view (FOV) is captured by the first imaging device at a second point time. In a second step 720, a second image that is visible to the human eye is then generated based on the electromagnetic data captured by the first imaging device 140, and is projected on the lens 110. In a third step 730, a second distance D from the target object in the user FOV is determined by the first measurement sensor 150. The distance D from the target object to the first measurement sensor 150 may or may not have changed since the last iteration in Figure 3. In a fourth step 740, an angle $\phi$ between the optical axis and the target object is determined based on the second distance D and the fixed distance d. In a fifth step 750, the pixel offset value $P_h$ to be applied to the second image such that it is projected on the lens 110 overlaid on the target object in the real-world environment is computed. Then in a sixth step 760 the second image is re-positioned on the lens 110 by the pixel offset value $P_h$ such that the second image is overlaid on the target object in the real-world environment. This process can be repeated continuously during use to ensure real-time alignment of the virtual image on the real-world environment visible to the wearer through the lens 110.

**Claims**

1.  A method for real-time alignment of a virtual image over a real-world environment on an augmented-reality (AR) device display, comprising:

    capturing at a first time, by a first imaging device, electromagnetic data of a target object in the user field-of-view (FOV), wherein the electromagnetic data comprises wavelengths of light that are not perceptible to the human eye;
    generating, based on the electromagnetic data, a first image that is visible to the human eye and projecting said first image on the AR device display;

    determining, by a first measurement sensor, a first distance (D) to the target object in the user FOV;
    determining, based on the first distance (D) and a fixed distance (d) between the first imaging device and an eye of the user, an angle ($\phi$) between the optical axis and the target object;
    computing a pixel offset value to be applied to the first image such that it is projected on the AR device display aligned with the target object in the real-world environment; and
    re-projecting the first image on the display by the pixel offset value such that the first image is aligned with the target object in the real-world environment.

2.  The method of claim 1, comprising repeating these steps in a continuous loop during use of the AR device.

3.  The method of claim 1 or claim 2, further comprising:

    capturing at a second time, by the first imaging device, electromagnetic data of a target object in the user field-of-view (FOV), wherein the optical data comprises wavelengths of light that are not perceptible to the human eye;
    generating, based on the electromagnetic data, a second image that is visible to the human eye and projecting said second image on the AR device display;
    determining, by the first measurement sensor, a second distance (D) from the target object in the user FOV;
    determining, based on the second distance (D) and the fixed distance (d), an angle ($\phi$) between the optical axis and the target object;
    computing a pixel offset value to be applied to the second image such that it is projected on the AR device display overlaid on the target object in the real-world environment; and
    re-positioning the second image on the display by the pixel offset value such that the second image is overlaid on the target object in the real-world environment.

4.  The method of claim 1 or claim 2, wherein the pixel offset value is computed using the formula

    $$P_h = (\frac{\pi}{2} - \phi - \tan^{-1}\left(\frac{D}{d}\right))\frac{R_h}{F_h} \qquad , \qquad \text{where}$$

    $P_h$ is the horizontal pixel offset applied to the first image;
    D is the distance of the target object from the observer, measured by the first measurement sensor;
    d is the fixed distance from the first imaging device to the eye of the user.
    $R_h$ is the horizontal resolution of the first imaging device.

$F_h$ is the horizontal field of view of the first imaging device.

$\phi$ is the physical angle of the first imaging device where 0° is parallel to the optical axis of the display.

5. The method of claims 1-4, wherein the first distance and the second distance (D) are equal, or wherein first distance and the second distance (D) are different.

6. The method of claims 1-5, wherein the electromagnetic data captured by the first optical device comprises one or more multispectral wavelengths.

7. The method of claim 6, wherein the one or more multispectral wavelengths comprise one or more infrared wavelengths.

8. The method of claims 1-7, wherein the target object is selected to be the object returning the greatest reflected signal in a predefined area of the user FOV.

9. An augmented-reality (AR) display device comprising:

one or more at least partially transparent lens located such that when the headset is worn by a user it overlays on the user's eye;
means for projecting an image on to the one or more at least partially transparent lens;
a first imaging device configured for capturing electromagnetic data at least comprising wavelengths of light that are not perceptible to the human eye;
a first measurement sensor configured for determining a first distance (D) to a target object in the user's field-of-view (FOV);
and
one or more processors configured to execute the following steps:

generating, based on the electromagnetic data captured by the first imaging device, a first image that is visible to the human eye;
determining, based on the first distance (D) and a fixed distance (d) between the first imaging device and an eye of the user, an angle ($\phi$) between the optical axis and the target object;
computing a pixel offset value to be applied to the first image such that it is projected on one of the at least partially transparent lenses aligned with the target object in the real-world environment; and
re-positioning the first image from the optical axis by the pixel offset value such that the first image is aligned with the target object in the real-world environment.

10. The AR display device of claim 9, being configured to repeat the steps of generating, determining, computing, and re-positioning in a continuous loop during use of the AR display device.

11. The AR display device of claim 9 or claim 10, wherein the first imaging device comprises a multispectral electromagnetic imaging camera.

12. The AR display device of claim 11, wherein the first imaging device is configured to capture one or more wavelengths of infrared light.

13. The AR display device of claims 9-12, wherein the first measurement sensor comprises a LiDAR sensor, a Radar sensor, an infrared (IR) distance sensor, or an ultrasonic distance sensor.

14. The AR display device of claims 9-13, wherein the processor(s) are configured to compute the pixel offset value using the formula $P_h = (\frac{\pi}{2} - \phi - \tan^{-1}(\frac{D}{d}))\frac{R_h}{F_h}$,

where

$P_h$ is the horizontal pixel offset applied to the first image;
D is the distance of the target object from the observer, measured by the first measurement sensor;
d is the fixed distance from the first imaging device to the eye of the user.
$R_h$ is the horizontal resolution of the first imaging device;
$F_h$ is the horizontal field of view of the first imaging device; and

φ is the physical angle of the first imaging device where 0° is parallel to the optical axis of the display.

15. A non-transitory computer-readable medium comprising instructions stored thereon for carrying out the steps of any one of claims 1-8.

FIG. 1

210

230

Make distance
measurement

Offset displayed
image

Calculate image
offset based on
distance

220

FIG. 2

310

Capture EM data of a target object in the user FOV

320

Generate first image visible to human eye based on captured EM data

330

Determine a first distance to the target object in the user FOV

340

Determine angle $\phi$ between optical axis and the target object based on the first distance D and a fixed distance d between the first imaging device and an eye of the user

350

Compute pixel offset value to be applied to the first image such that it is projected on the AR device display aligned with the target object in the real-world environment

360

Re-projecting the first image on the display by the pixel offset value

FIG. 3

FIG. 4

EP 4 703 850 A1

FIG. 5

14

Before alignment
The displayed section of the whole field
of view is not aligned with the subject.

After alignment
The displayed section of the whole field of
view is aligned with the subject. We are
effectively "looking more inward" with the
camera.

FIG. 6

310-360

710

Capture EM data of a target object in the user FOV

720

Generate second image visible to human eye based on captured EM data

730

Determine a second distance to the target object in the user FOV

740

Determine angle φ between optical axis and the target object based on the second distance D and a fixed distance d between the first imaging device and an eye of the user

750

Compute pixel offset value to be applied to the second image such that it is projected on the AR device display aligned with the target object in the real-world environment

760

Re-projecting the second image on the display by the pixel offset value

FIG. 7

European Patent Office
Europäisches Patentamt
European Patent Office
Office européen des brevets

**EUROPEAN SEARCH REPORT**

Application Number

EP 24 20 9387

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2021/160441 A1 (BLEYER MICHAEL [US] ET AL) 27 May 2021 (2021-05-27)<br>* abstract *<br>* figures 1,2A,3A-3F *<br>* paragraph [0006] - paragraph [0007] *<br>* paragraph [0036] - paragraph [0044] *<br>* paragraph [0050] - paragraph [0054] *<br>* paragraph [0063] - paragraph [0083] *<br>* paragraph [0166] *<br>----- | 1-7,9-15<br><br>8 | INV.<br>G06F3/01<br>G06T7/30<br>H04N23/11<br>H04N23/23 |
| A | US 2024/153131 A1 (PRICE RAYMOND KIRK [US] ET AL) 9 May 2024 (2024-05-09)<br>* abstract *<br>* figure 8 *<br>* paragraph [0052] - paragraph [0053] *<br>* paragraph [0061] - paragraph [0069] *<br>* paragraph [0086] *<br>* paragraph [0101] *<br>* paragraph [0104] - paragraph [0106] *<br>* paragraph [0115] *<br>* paragraph [0120] - paragraph [0126] *<br>----- | 1-15 | |
| A | US 2021/400249 A1 (EDMONDS CHRISTOPHER DOUGLAS [US] ET AL) 23 December 2021 (2021-12-23)<br>* abstract *<br>* figures 4A-4C *<br>* paragraph [0100] *<br>----- | 1-15 | TECHNICAL FIELDS SEARCHED (IPC)<br><br>G06F<br>H04N<br>G06T |

The present search report has been drawn up for all claims

| Place of search | Date of completion of the search | Examiner |
|---|---|---|
| Munich | 19 March 2025 | Fedrigo, Enrico |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 9387

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2025

| Patent document cited in search report | Publication date | Patent family member(s) | | Publication date |
|---|---|---|---|---|
| US 2021160441 A1 | 27-05-2021 | EP | 4066481 A1 | 05-10-2022 |
| | | US | 2021160440 A1 | 27-05-2021 |
| | | US | 2021160441 A1 | 27-05-2021 |
| | | WO | 2021108009 A1 | 03-06-2021 |
| US 2024153131 A1 | 09-05-2024 | CN | 116194866 A | 30-05-2023 |
| | | EP | 4182889 A1 | 24-05-2023 |
| | | US | 11049277 B1 | 29-06-2021 |
| | | US | 2022020168 A1 | 20-01-2022 |
| | | US | 2023005179 A1 | 05-01-2023 |
| | | US | 2024153131 A1 | 09-05-2024 |
| | | WO | 2022015382 A1 | 20-01-2022 |
| US 2021400249 A1 | 23-12-2021 | EP | 4169246 A1 | 26-04-2023 |
| | | US | 2021400249 A1 | 23-12-2021 |
| | | WO | 2021257143 A1 | 23-12-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11232609 B, Birbaumer
- US 20200366872 A1, Vettese
- WO 2015173528 A1, Granier
- US 6016160 A, Coombs
- US 20050195277 A1, Yamasaki
- US 6849849 B, Warner
- US 2006081778 A1
- US 6255650 B
- US 7411193 B
- US 20230148872 A1, Sowards